# EUROPEAN PATENT APPLICATION

(11) **EP 2 664 846 A2**
(43) Date of publication of application: **20.11.2013**
(21) Application number: 13168017.5
(22) Date of filing: 16.05.2013
(51) Int. Cl.: F22B 1/00

(54) **Steam generation system**

(30) Priority: 18.05.2012 JP 2012115040
(71) Applicant: Kabushiki Kaisha Toshiba, Tokyo 105-8001 (JP)
(72) Inventor: Goto, Koichi, Tokyo, 105-8001 (JP); Okita, Nobuo, Tokyo, 105-8001 (JP)
(74) Representative: HOFFMANN EITLE

(57) **Abstract**

A steam generation system of an embodiment has a first to fourth heating units. The first heating unit heats a first heat medium by collected solar heat. The second heating unit heats a second heat medium different from the first heat medium by the collected solar heat. The third heating unit heats water or steam by heat of the heated second heat medium. The fourth heating unit further heats the heated water or steam by heat of the heated first heat medium so as to generate steam which is further increased in temperature.

## Description

### FIELD

Embodiments described herein relate generally to a steam generation system.

### BACKGROUND

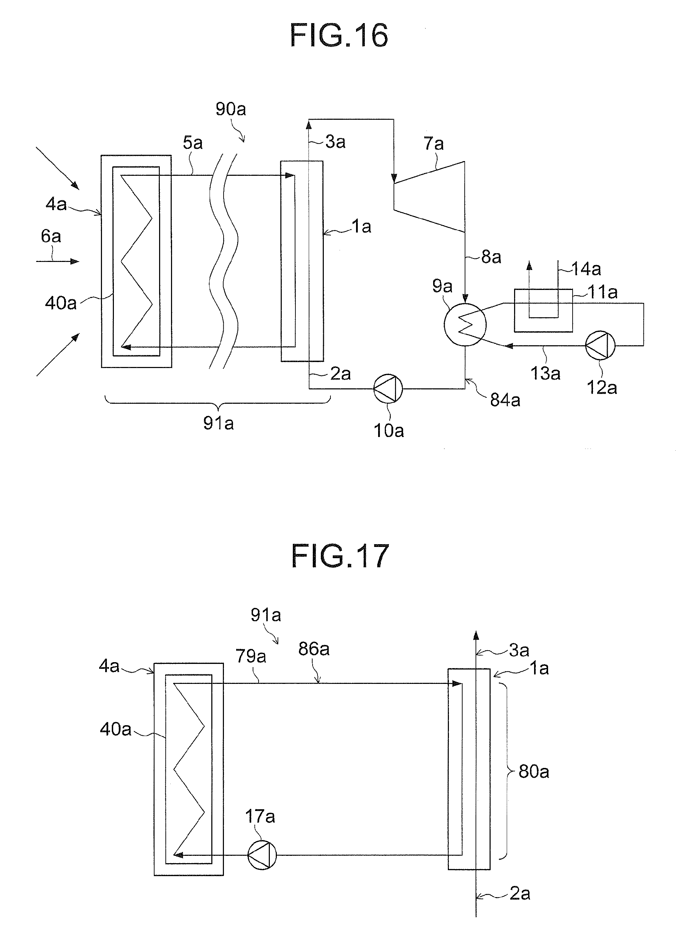

The structure of a conventional first steam turbine plant 90a using solar heat, which is a first prior art, will be described based on FIG. 16 and FIG. 17. The conventional first steam turbine plant 90a has, as illustrated in FIG. 16, a condenser 9a, a cooler 11a, a cooling water pump 12a, a water supply pump 10a, a steam turbine system circulation channel 84a, a steam turbine 7a, and a conventional first steam generation system 91a.

The steam turbine system circulation channel 84a forms a channel from the steam turbine 7a, through the condenser 9a, the water supply pump 10a and a steam generator 1a, which will be described later, and back to the steam turbine 7a. Water 2a pressurized in the water supply pump 10a is transported to the steam generator 1a. The transported water 2a is heated in the steam generator 1a and changes to steam 3a.

The steam 3a flows in via a high pressure side of the steam turbine 7a and expands in the steam turbine 7a, and decreases both in pressure and temperature as it proceeds toward a low pressure side of the steam turbine 7a. A rotation shaft of the steam turbine 7a rotated by the steam 3a which expands progressively is connected to a not-illustrated power generator. Axial driving force of this rotation shaft is transmitted to the power generator, to thereby generate power.

Turbine exhaust 8a exhausted from the low pressure side of the steam turbine 7a flows into the condenser 9a. The turbine exhaust 8a is cooled by cooling water 13a in the condenser 9a and becomes water 2a, and is guided to the water supply pump 10a to be circulated.

On the other hand, the above-described cooling water 13a is transferred by the cooling water pump 12a to the condenser 9a. After heated by the turbine exhaust 8a in the condenser 9a, the cooling water 13a is cooled by an atmosphere 14a in the cooler 11a, and is further guided to the cooling water pump 12a to be circulated.

A cooling tower may be used for the cooler 11a, and in this case, as illustrated in FIG. 16, it may be structured such that the atmosphere 14a is not forcibly blown. Instead of this, it may be structured such that the atmosphere 14a is forcibly blown using a not-illustrated blower. Further, for example, when sea water or river water is used as the cooling water 13a, the used sea water or river water is not circulated and is discharged to the sea or a river, and thus the cooler 11a is unnecessary, which is different from the structure illustrated in FIG. 16. Note that many steam turbine plants using solar heat are not located near the sea or a river. Therefore, in such a case, it is necessary to provide the cooler 11a and circulate the cooling water 13a as illustrated in FIG. 16. Further, in many cases, a not-illustrated blower is used to forcibly blow the atmosphere 14a.

The above-described conventional first steam generation system 91a has, as illustrated in FIG. 17, a heat collector 4a, a molten salt circulation channel 86a, and the above-described steam generator 1a. A heat medium 5a in FIG. 16 is a molten salt 79a in FIG. 17. The heat collector 4a collects solar heat (radiant heat) by collecting solar rays 6a as illustrated in FIG. 16. The heat collector 4a has a molten salt heater 40a for heating the molten salt 79a by the collected solar heat. On the other hand, the steam generator 1a has a molten salt heat exchanger 80a.

The molten salt circulation channel 86a circulates the molten salt 79a between the molten salt heater 40a and the molten salt heat exchanger 80a. As the molten salt 79a, for example, a molten nitrate can be exemplified. A molten salt pump 17a is provided on the molten salt circulation channel 86a. The molten salt pump 17a transfers the molten salt 79a on the molten salt circulation channel 86a. The molten salt heat exchanger 80a which the steam generator 1a has heats the water 2a flown into the steam generator 1a by retained heat of the molten salt 79a heated by the molten salt heater 40a, to thereby obtain the steam 3a.

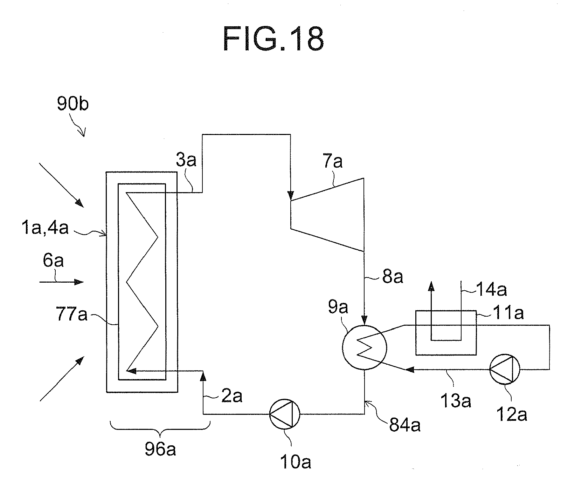

Next, the structure of a conventional second steam turbine plant 90b using solar heat, which is a second prior art, will be described based on FIG. 18. Here, only parts different in structure from the above-described conventional first steam turbine plant 90a will be described. The conventional second steam turbine plant 90b has a conventional second steam generation system 96a. The steam generator 1a and the heat collector 4a are integrated as the conventional second steam generation system 96a. Water 2a is heated in the heat collector 4a, which is also the steam generator 1a, by receiving radiant heat of solar rays 6a. The water 2a is transported to the steam generator 1a, which is also the heat collector 4a, and is heated therein and thereby changes to steam 3a. The conventional second steam turbine plant 90b is simple in overall structure as compared to the conventional first steam turbine plant 90a, which is the first prior art, but it is difficult to increase the temperature of the steam 3a flowing into the turbine 7a to high temperatures.

Here, the higher the temperature of the steam 3a illustrated in FIG. 16 to FIG. 18, the higher the efficiency of the steam turbine plants. However, only steam 3a up to about 400°C can be produced in the second prior art. When oil is used as the heat medium 6a in the first prior art, only steam 3a up to about 375°C can be obtained. Accordingly, when a tower-type heat collector is applied as the heat collector 4a, and further the molten salt 79a such as a molten nitrate is used as the heat medium 5a, the molten salt 79a becomes slightly less than 600°C at the entrance of the steam generator 1a, making it possible to generate steam 3a at 565°C for example. It is desired to allow heat exchange so that the molten salt 79a becomes as low as possible in temperature in the steam generator 1a, but heat exchange can be allowed only to a temperature that is sufficiently higher than the melting point. Thus, the molten salt 79a flowing out from the steam generator 1a is at about 290°C for example.

However, when the molten nitrate is used as the molten salt 79a for example, the molten nitrate solidifies when it decreases in temperature below 220°C that is the melting point, and thus it is necessary to provide heat retention on all the channels of the molten salt 79a. In a channel where heat retaining is difficult or where melting after solidification is difficult, heating with an electric heater or the like is needed. In order to make it difficult for the molten salt 79a to solidify by allowing it to flow, the molten salt 79a may be circulated by the molten salt pump 17a even when there is no heat exchange phenomenon in some cases. To allow the molten salt 79a to change from the solidified state to a flowing state, it needs to be heated from the amount of latent heat, and furthermore, this leads to a risk that a volume change of the molten salt 79a damages the piping constituting the channels.

Further, for example, in consideration of a plant operating state in which solar heat cannot be obtained at all or cannot be obtained sufficiently, it is also considered to heat the molten salt 79a using heat which is stored in advance in heat storage liquid circulated and transported or in a heat storage medium stored in a heat storage tank during a plant operating state that the solar heat can be obtained sufficiently. However, the heat storage liquid targeting at very high temperatures such as 500°C often has a melting point equal to or higher than room temperature, and thus for example regarding channels of the heat storage liquid, the above-described risk exists similarly to the channels of the molten salt 79a. On the other hand, the heat storage medium may be a substance that changes in phase to a solid, but in this case, it is essential to have measures against solidification.

Further, since the molten salt 79a oxidizes and changes to a different substance when contacted with an atmosphere, when a heat retaining tank for example which stores the molten salt 79a while retaining its heat is provided on the channel, it is necessary that the inside of this heat retaining tank would not be in contact with the atmosphere. For example, it is necessary to seal nitrogen in the heat retaining tank. Further, in consideration of the volume change of molten salt, it is desired to provide a structure to open the channel of the molten salt, or the like. However, in order to avoid contact of the molten salt with the atmosphere, the structure to open the channel needs to be provided in a chamber in a nitrogen atmosphere.

Moreover, the molten salt 79a such as a molten nitrate is expensive in general. Further, when the tower-type heat collector is used as the heat collector 4a, it becomes necessary to raise the molten salt 79a to a physically high position. At that time, since the molten salt 79a such as a molten nitrate has high density, the molten salt pump 17a needs to have a quite high lifting height, which also increases energy consumption.

An object to be solved by the embodiments is to provide a steam generation system which enables reduction in total use amount or flow amount of a heat medium which is difficult to be handled, such as a molten salt for example.

### BRIEF DESCRIPTION OF THE DRAWINGS

FIG. 1 is a schematic diagram illustrating a steam turbine plant including a steam generation system according to a first embodiment.

FIG. 2 is a schematic diagram illustrating the steam generation system of FIG. 1.

FIG. 3 is a schematic diagram illustrating a steam generation system according to a second embodiment.

FIG. 4 is a schematic diagram illustrating a steam generation system according to a third embodiment.

FIG. 5 is a schematic diagram illustrating a steam generation system according to a fourth embodiment.

FIG. 6 is a schematic diagram illustrating a steam generation system according to a fifth embodiment.

FIG. 7 is a schematic diagram illustrating a steam generation system according to a sixth embodiment.

FIG. 8 is a schematic diagram illustrating a steam generation system according to a seventh embodiment.

FIG. 9 is a schematic diagram illustrating a steam generation system according to an eighth embodiment.

FIG. 10 is a schematic diagram illustrating a steam generation system according to a ninth embodiment.

FIG. 11 is a schematic diagram illustrating a steam generation system according to a tenth embodiment.

FIG. 12 is a schematic diagram illustrating a steam generation system according to an eleventh embodiment.

FIG. 13 is a view illustrating the structure of a tower-type heat collector.

FIG. 14 is a view illustrating the structure of a trough-type heat collector.

FIG. 15 is a schematic diagram illustrating a steam generation system according to a twelfth embodiment.

FIG. 16 is a schematic diagram illustrating a steam turbine plant according to a first prior art.

FIG. 17 is a schematic diagram illustrating a conventional first steam generation system included in the steam turbine plant of FIG. 16.

FIG. 18 is a schematic diagram illustrating a steam turbine plant according to a second prior art.

### DETAILED DESCRIPTION

A steam generation system of an embodiment has a first to fourth heating units. The first heating unit heats a first heat medium by collected solar heat. The second heating unit heats a second heat medium different from the first heat medium by the collected solar heat. The third heating unit heats water or steam by heat of the heated second heat medium. The fourth heating unit further heats the heated water or steam by heat of the heated first heat medium so as to generate steam which is further increased in temperature.

Hereinafter, embodiments will be described based on the drawings.

### <First Embodiment>

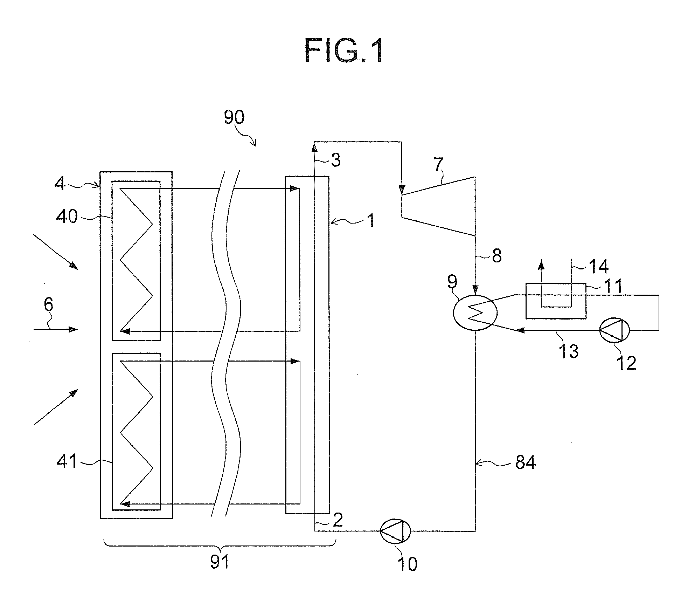

As illustrated in FIG. 1, a steam turbine plant 90 including a steam generation system 91 according to this embodiment drives a steam turbine 7 by utilizing solar heat. The steam turbine plant 90 has a condenser 9, a cooler 11, a cooling water pump 12, a water supply pump 10, a steam turbine system circulation channel 84, and the aforementioned steam turbine 7 and steam generation system 91.

The steam turbine system circulation channel 84 forms a channel from the steam turbine 7, through the condenser 9, the water supply pump 10, and a steam generator 1, which will be described later, provided in the steam generation system 91, and back to the steam turbine 7. Specifically, water 2 pressurized in the water supply pump 10 is transported to the steam generator 1. The transported water 2 is heated in the steam generator 1 and changes to steam 3.

The steam 3 flows in via a high pressure side of the steam turbine 7 and expands in the steam turbine 7, and decreases both in pressure and temperature. A rotation shaft of the steam turbine 7 rotated by the steam 3 which expands progressively is connected to a not-illustrated power generator. Axial driving force of this rotation shaft is transmitted to the power generator, to thereby generate power.

After expanded in the steam turbine 7, the steam 3 decreases both in pressure and temperature as it proceeds toward a low pressure side of the steam turbine 7. Turbine exhaust 8 exhausted from the low pressure side of the steam turbine 7 flows into the condenser 9. The turbine exhaust 8 is cooled by cooling water 13 in the condenser 9 and becomes water 2, and is guided to the water supply pump 10 to be circulated.

On the other hand, the above-described cooling water 13 is transferred by the cooling water pump 12 to the condenser 9. After heated by the turbine exhaust 8 in the condenser 9, the cooling water 13 is cooled by an atmosphere 14 in the cooler 11, and is further guided to the cooling water pump 12 to be circulated.

A cooling tower may be used for the cooler 11, and in this case, as illustrated in FIG. 1, it may be structured such that the atmosphere 14 is not forcibly blown. Instead of this, it may be structured such that the atmosphere 14 is forcibly blown using a not-illustrated blower. Further, for example, when sea water or river water is used as the cooling water 13, the used sea water or river water is not circulated and is discharged to the sea or a river, and thus the cooler 11 is unnecessary, which is different from the structure illustrated in FIG. 1. Note that many steam turbine plants using solar heat are not located near the sea or a river. Therefore, in such a case, it is necessary to provide the cooler 11 and circulate the cooling water 13 as illustrated in FIG. 1. Further, in many cases, a not-illustrated blower is used to forcibly blow the atmosphere 14.

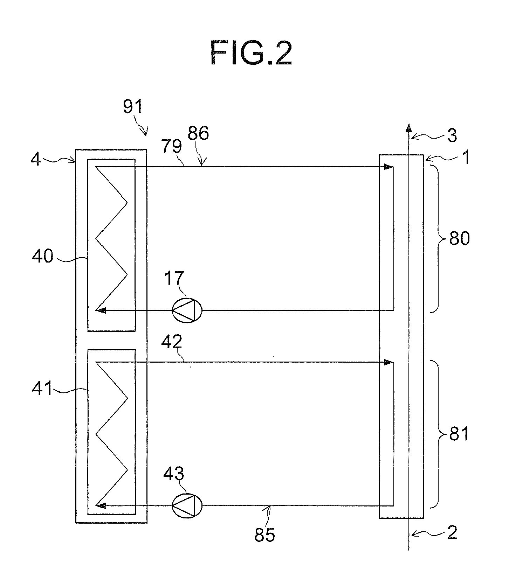

Next, a structure of the steam generation system 91 of this embodiment will be described. As illustrated in FIG. 2, the steam generation system 91 has a heat collector 4, an oil circulation channel 85 functioning as a first circulation channel, a molten salt circulation channel 86 functioning as an eighth circulation channel, and the above-described steam generator 1.

The heat collector 4 collects solar heat (radiant heat) by collecting solar rays 6. The heat collector 4 has a molten salt heater 40 functioning as a first heating unit and an oil heater 41 functioning as a second heating unit. The steam generator 1 has an oil heat exchanger 81 functioning as a third heating unit and a molten salt heat exchanger 80 functioning as a fourth heating unit. It is not necessary to provide the oil heater 41 and the molten salt heater 40 in one heat collector 4. For example, there may be plural heat collectors 4, and a heat collector 4 in which the oil heater 41 is provided and a heat collector 4 in which the molten salt heater 40 is provided may be different.

The oil circulation channel 85 circulates oil 42 as a second heat medium between the oil heater 41 and the oil heat exchanger 81. On the other hand, the molten salt circulation channel 86 circulates a molten salt 79 as a first heat medium between the molten salt heater 40 and the molten salt heat exchanger 80. As the molten salt 79, for example, a molten nitrate can be exemplified.

A molten salt pump 17 is provided on the molten salt circulation channel 86. The molten salt pump 17 transfers the molten salt 79 on the molten salt circulation channel 86. On the other hand, on the route of the oil circulation channel 85, an oil pump 43 for transferring the oil 42 is provided.

In the steam generator 1, with reference to the flow direction of the water 2 and the steam 3, the oil heat exchanger 81 is disposed upstream and the molten salt heat exchanger 80 is disposed downstream. Describing more specifically, with reference to the flow direction of the water 2 and the steam 3, the steam generator 1 heats the upstream side by the oil 42 and heats the downstream side by the molten salt 79.

Specifically, the oil heater 41 heats the oil 42 by collected solar heat. The molten salt heater 40 heats the molten salt 79 by collected solar heat. The oil heat exchanger 81 heats the water 2 flown in via the water supply pump 10 side by heat of the heated oil 42. The molten salt heat exchanger 80 further heats by heat of the heated molten salt 79 the water heated by heat of the oil 42 or steam changed from the heated water, so as to generate the steam 3 which is further increased in temperature.

In the steam generation system 91 of this embodiment, the water 2 is heated by the oil heat exchanger 81 and changes to steam, and the steam is heated to, for example, 375°C at the exit of the oil heat exchanger 81. At the exit of the molten salt heat exchanger 80, the molten salt 79 can be heated to, for example, 400°C. In this case, in the molten salt heater 40, the molten salt 79 heats the steam while varying from 400°C, not from 290°C for example, to slightly less than 600°C.

Specifically, in the steam generation system 91 of this embodiment, by applying the structure divided into the high temperature side using the molten salt 79 and the low temperature side using the oil 42, it is possible to reduce a constituent part such as the channel of the molten salt 79 in the heat collector 4 and the steam generator 1 in the steam generation system 91. In short, in the steam generation system 91, the amount of heating by the molten salt 79 in the steam generator 1 decreases, and thus the part using the molten salt 79 is small, which is a heat medium that is difficult to handle and expensive, thereby allowing reduction in total use amount of the molten salt 79.

When the entire channel of the molten salt 79 is decreased, the risk of damage to the channel by a volume change accompanying a temperature change or phase change of the molten salt 79 decreases.

Further, by dividing the heat medium for heating into the oil 42 and the molten salt 79, the freedom of design increases, and a design in which the flow amount of the molten salt 79 is reduced is also possible. Further, when a tower-type heat collector for example, which will be described later, is applied as the heat collector 4, the molten salt 79 has to be raised to a high position in a vertical direction, and also the molten salt 79 has high density. Therefore, the molten salt pump 17 needs to have a quite high lifting height. However, when employing the design in which the flow amount of the molten salt 79 is decreased, a pump with low specifications, such as small power consumption for example, can be chosen as the molten salt pump 17, and also the power consumption of the entire steam generation system 91 can be reduced.

Moreover, since the oil 42 does not solidify at room temperature, it is not necessary to retain heat of the channel or to heat the channel by a heater. Therefore, it is possible to reduce the amounts of heat insulators for the entire channels of the molten salt 79 and the oil 42, the amount of heating by a heater, and the amount of circulation for the purpose of preventing solidification of the molten salt 79.

### <Second Embodiment>

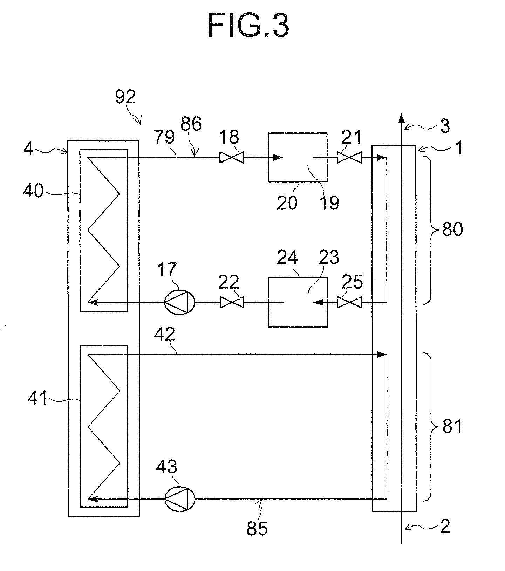

Next, a second embodiment will be described based on FIG. 3. Note that in FIG. 3, substantially the same components as those in the first embodiment illustrated in FIG. 2 are denoted by the same numerals, and duplicated descriptions are omitted.

As illustrated in FIG. 3, in a steam generation system 92 of this embodiment, a high temperature retaining tank 20 and a medium temperature retaining tank 24, and open/close valves 18, 21, 22, 25 are provided on the molten salt circulation channel 86, in addition to the structure of the steam generation system 91 according to the first embodiment. In the high temperature retaining tank 20 and the medium temperature retaining tank 24, for example, nitrogen is sealed for preventing a change in physical properties of the molten salt by contacting with the atmosphere.

Here, under a plant operating condition that the solar heat cannot be obtained at all or cannot be obtained sufficiently, such as at night or under cloudy sky, the open/close valves 18, 21, 22, 25 are closed, and the molten salt pump 17 and the oil pump 43 are stopped. Regarding other than the steam generation system 91, the water supply pump 10 and the cooling water pump 12 illustrated in FIG. 1 are stopped, and the steam turbine 7 is not driven, so as not to perform power generation.

When it changed to a plant operating condition that the solar heat can be obtained sufficiently, the open/close valves 18, 21, 22, 25 are opened, and the molten salt pump 17 and the oil pump 43 are operated. In this case, the molten salt 79 heated in the molten salt heater 40 of the heat collector 4 passes through the high temperature retaining tank 20 and then flows into the molten salt heat exchanger 80 of the steam generator 1. Moreover, the molten salt 79 cooled in the molten salt heat exchanger 80 passes through the medium temperature retaining tank 24 and then flows into the heat collector 4. At that time, in the high temperature retaining tank 20 and the medium temperature retaining tank 24, large amounts of stored molten salts 19, 23 are stored respectively in a sufficiently high temperature state. Regarding other than the steam generation system 91, the water supply pump 10 and the cooling water pump 12 are operated, and the steam turbine 7 is driven, so as to perform power generation.

By this structure, when it changed to a plant operating condition that the solar heat can be obtained sufficiently, the time until the steam generator 1 reaches a state of generating the steam 3 at sufficiently high temperature can be shortened largely. Note that although a heat retention tank for the use corresponding to the high temperature retaining tank 20 or the medium temperature retaining tank 24 is not necessary since the oil 42 does not solidify at room temperature, a heat retention tank for this purpose may be provided on the oil circulation channel 85.

In the steam generation system 92 of this embodiment, as compared to the first embodiment, when it changed to a plant operating condition that the solar heat can be obtained sufficiently, the time until the steam generator 1 reaches a state of generating the steam 3 at sufficiently high temperature can be shortened largely. Further, in the steam generation system 92, as compared to the case where similar technology is applied to the first prior art, the total use amount or flow rate of the molten salt 79 which is difficult to handle can be reduced, similarly to the first embodiment. Moreover, in the steam generation system 92, in addition to all the effects of the first embodiment, the amount of sealed nitrogen in the high temperature retaining tank 20 and the medium temperature retaining tank 24 for suppressing physical property changes of the molten salt can be reduced.

### <Third Embodiment>

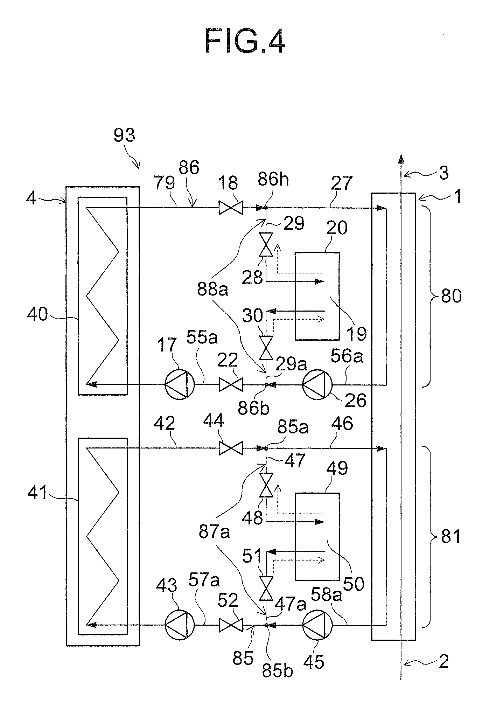

Next, a third embodiment will be described based on FIG. 4. Note that in FIG. 4, substantially the same components as those in the second embodiment illustrated in FIG. 3 are denoted by the same numerals, and duplicated descriptions are omitted.

As illustrated in FIG. 4, a steam generation system 93 of this embodiment has an oil temperature retaining tank 49 and open/close valves 28, 30 instead of the medium temperature retaining tank 24 and the open/close valves 21, 25 of the steam generation system 91 according to the first embodiment. In addition to them, the steam generation system 93 further has open/close valves 28, 30, 44, 48, 51, 52, a second molten salt pump 26, a second oil pump 45, a second circulation channel 57a, a third circulation channel 58a, a ninth circulation channel 55a, and a tenth circulation channel 56a. Here, in the steam generation system 93 of this embodiment, the layout of the high temperature retaining tank 20 and so on is different from that in the second embodiment, as will be described later.

The oil temperature retaining tank 49 functions as a first storage unit for storing oil 47 to be circulated as temperature retained oil 50. As illustrated in FIG. 4, the second circulation channel 57a is constituted of a first branch channel 87a branching from a first branch point 85a on the oil circulation channel 85, passing through the oil temperature retaining tank 49, and connected to a second branch point 85b on the oil circulation channel 85, a part of the oil circulation channel 85 connected from the second branch point 85b to the oil heater 41, the oil heater 41, and a part of the oil circulation channel 85 from the oil heater 41 to the first branch point 85a. That is, the second circulation channel 57a passes through the first branch point 85a, the first branch channel 87a, the second branch point 85b, and the parts of the oil circulation channel 85, and meanwhile circulates the oil 47 between the oil temperature retaining tank 49 and the oil heater 41.

On the other hand, the third circulation channel 58a is constituted of the first branch channel 87a, a part of the oil circulation channel 85 connected from the first branch point 85a to the oil heat exchanger 81, the oil heat exchanger 81, and a part of the oil circulation channel 85 from the oil heat exchanger 81 to the second branch point 85b. This third circulation channel 58a passes through the second branch point 85b, the first branch channel 87a, the first branch point 85a, and the parts of the oil circulation channel 85, and meanwhile circulates oil 46 between the oil temperature retaining tank 49 and the oil heat exchanger 81.

Further, the high temperature retaining tank 20 functions as a third storage unit for storing a molten salt 29 to be circulated as the stored molten salt 19. As illustrated in FIG. 4, the ninth circulation channel 55a is constituted of a fourth branch channel 88a branching from a seventh branch point 86h on the molten salt circulation channel 86, passing through the high temperature retaining tank 20, and connected to an eighth branch point 86b on the molten salt circulation channel 86, a part of the molten salt circulation channel 86 connected from the eighth branch point 86b to the molten salt heater 40, the molten salt heater 40, and a part of the molten salt circulation channel 86 from the molten salt heater 40 to the seventh branch point 86h. That is, the ninth circulation channel 55a passes through the seventh branch point 86h, the fourth branch channel 88a, the eighth branch point 86b, and the parts of the molten salt circulation channel 86, and meanwhile circulates the molten salt 29 between the high temperature retaining tank 20 and the molten salt heater 40.

On the other hand, the tenth circulation channel 56a is constituted of the fourth branch channel 88a, a part of the molten salt circulation channel 86 connected from the seventh branch point 86h to the molten salt heat exchanger 80, the molten salt heat exchanger 80, and a part of the molten salt circulation channel 86 from the molten salt heat exchanger 80 to the eighth branch point 86b. This tenth circulation channel 56a passes through the eighth branch point 86b, the fourth branch channel 88a, the seventh branch point 86h, and the parts of the molten salt circulation channel 86, and meanwhile circulates a molten salt 27 between the high temperature retaining tank 20 and the molten salt heat exchanger 80.

Specific operations will be described below. Under the plant operating condition that the solar heat can be obtained sufficiently, the open/close valves 18, 28, 30, 22, 44, 48, 51, 52 are opened, and the molten salt pump 17 and the oil pump 43 are operated. The second molten salt pump 26 and the second oil pump 45 may be either operated or not operated. The molten salt 79 branches into the molten salt 27 flowing into the steam generator 1 and the molten salt 29 flowing into the high temperature retaining tank 20. The oil 42 branches into the oil 46 flowing into the steam generator 1 and the oil 47 flowing into the oil temperature retaining tank 49.

When the second molten salt pump 26 is operated simultaneously as the molten salt pump 17, there may be a flow such that the molten salt 29 flows back and further flows into the steam generator 1 instead of flowing into the molten salt heater 40. Thus, it is necessary to suppress the operating level of the second molten salt pump 26 so as to prevent such a flow. Similarly, when the second oil pump 45 is operated simultaneously as the oil pump 43, there may be a flow such that the oil 47 flows back and further flows into the steam generator 1 instead of flowing into the oil heater 41. Thus, it is necessary to suppress the operating level of the second oil pump 45 so as to prevent such a flow.

Further, when the second molten salt pump 26 is stopped, the flow of the molten salt 27 should not be stopped by the stopped second molten salt pump 26. Thus, a pump structured to allow passing of the molten salt 27 even when it is stopped is used as the second molten salt pump 26, or a bypass channel which can be opened or closed selectively is provided therein. Similarly, when the second oil pump 45 is stopped, the flow of the oil 46 by the stopped second oil pump 45 should not be stopped. Thus, a pump structured to allow passing of the oil 46 even when it is stopped is used as the second oil pump 45, or a bypass channel which can be opened or closed selectively is provided therein.

When the stored molten salt 19 in the high temperature retaining tank 20 reaches a desired temperature, the open/close valves 28, 30 are closed. Further, when the temperature retained oil 50 in the oil temperature retaining tank 49 reaches a desired temperature, the open/close valves 48, 51 are closed.

On the other hand, under the plant operating condition that the solar heat cannot be obtained at all or cannot be obtained sufficiently, the open/close valves 18, 22, 44, 52 are closed, the open/close valves 28, 30, 48, 51 are opened, the molten salt pump 17 and the oil pump 43 are stopped, and the second molten salt pump 26 and the second oil pump 45 are operated. Thus, the flow direction of the molten salt 29 reverses to be in the direction of dotted arrows, and the stored molten salt 19 in the high temperature retaining tank 20 flows into the steam generator 1 as the molten salt 27. After heating the water or steam in the steam generator 1, the molten salt 27 returns to the high temperature retaining tank 20. Similarly, the flow direction of the oil 47 reverses to be in the direction of dotted arrows, and the temperature retained oil 50 in the oil temperature retaining tank 49 flows into the steam generator 1 as the oil 46. After heating the water 2 in the steam generator 1, the oil 46 returns to the oil temperature retaining tank 49.

If the second molten salt pump 26 is installed on the channel from the seventh branch point 86h to the point of flowing into the steam generator 1, it can be installed so that the molten salt 29 and a molten salt 29a both do not flow back. However, this location is at a sufficiently high temperature, and thus the second molten salt pump 26 becomes one with strict specifications. Thus, it is installed at the position of FIG. 4. Further, if the second oil pump 45 is installed on the channel from the first branch point 85a to the point of flowing into the steam generator 1, it can be installed so that the oil 47 and oil 47a both do not flow back. However, this location is at a sufficiently higher temperature than the position of FIG. 4, and thus the second oil pump 45 becomes one with more strict specifications. Thus, it is installed at the position of FIG. 4.

Accordingly, the steam turbine plant can be operated even under the plant operating condition that the solar heat cannot be obtained at all or cannot be obtained sufficiently, such as at night or under cloudy sky.

In the steam generation system 93 of this embodiment, as compared to the first embodiment, the steam turbine plant can be operated even under the plant operating condition that the solar heat cannot be obtained at all or cannot be obtained sufficiently, such as at night or under cloudy sky. Further, in the steam generation system 93, as compared to the case where similar technology is applied to the first prior art, in addition to all the effects of the first embodiment, while the stored molten salt 19 in the high temperature retaining tank 20 is kept at a temperature slightly less than 600°C for example, the temperature of the temperature retained oil 50 can be managed at 400°C for example, as illustrated in FIG. 4. Therefore, heat retaining in the oil temperature retaining tank 49 can be performed more easily. Further, in the steam generation system 93, since oil is stored in the oil temperature retaining tank 49, it is not necessary to seal nitrogen gas or the like in the oil temperature retaining tank 49 and the atmosphere may be sealed therein because oil does not change in physical properties even when in contact with the atmosphere, unlike the molten salt or the like.

Note that for the circulation system of oil of the steam generation system 93, the circulation system of oil of the steam generation system 91, 92 of the first or second embodiment may be applied.

### <Fourth Embodiment>

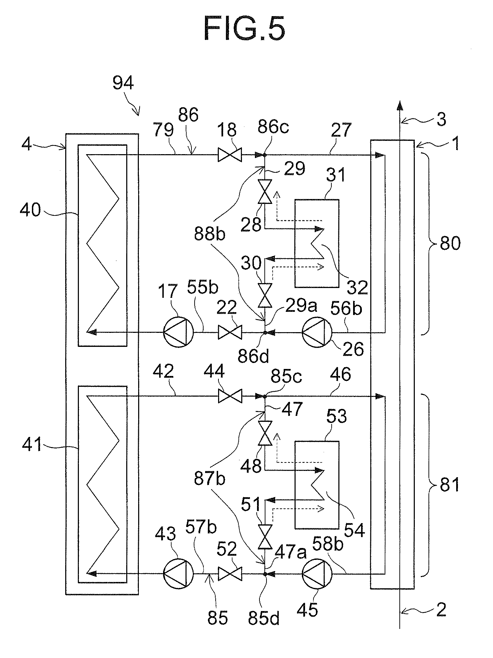

Next, a fourth embodiment will be described based on FIG. 5. Note that in FIG. 5, substantially the same components as those in the third embodiment illustrated in FIG. 4 are denoted by the same numerals, and duplicated descriptions are omitted.

As illustrated in FIG. 5, a steam generation system 94 of this embodiment has a heat storage tank 53 as a first heat storage unit and a third heat storage tank 31 as a third heat storage unit are provided instead of the oil temperature retaining tank 49 and the high temperature retaining tank 20 of the steam generation system 93 according to the third embodiment illustrated in FIG. 4. Further, the steam generation system 94 of this embodiment has a fourth circulation channel 57b, a fifth circulation channel 58b, an eleventh circulation channel 55b, and a twelfth circulation channel 56b instead of the second circulation channel 57a, the third circulation channel 58a, the ninth circulation channel 55a, and the tenth circulation channel 56a of the steam generation system 93 according to the third embodiment.

As illustrated in FIG. 5, the fourth circulation channel 57b is constituted of a second branch channel 87b branching from a third branch point 85c on the oil circulation channel 85, passing through the heat storage tank 53, and connected to a fourth branch point 85d on the oil circulation channel 85, a part of the oil circulation channel 85 connected from the fourth branch point 85d to the oil heater 41, the oil heater 41, and a part of the oil circulation channel 85 from the oil heater 41 to the third branch point 85c. That is, the fourth circulation channel 57b passes through the third branch point 85c, the second branch channel 87b, the fourth branch point 85d, and the parts of the oil circulation channel 85, and meanwhile circulates the oil 47 between the heat storage tank 53 and the oil heater 41.

On the other hand, the fifth circulation channel 58b is constituted of the second branch channel 87b, a part of the oil circulation channel 85 connected from the third branch point 85c to the oil heat exchanger 81, the oil heat exchanger 81, and a part of the oil circulation channel 85 from the oil heat exchanger 81 to the fourth branch point 85d. This fifth circulation channel 58b passes through the fourth branch point 85d, the second branch channel 87b, the third branch point 85c, and the parts of the oil circulation channel 85, and meanwhile circulates the oil 46 between the heat storage tank 53 and the oil heat exchanger 81.

Further, as illustrated in FIG. 5, the eleventh circulation channel 55b is constituted of a fifth branch channel 88b branching from a ninth branch point 86c on the molten salt circulation channel 86, passing through the third heat storage tank 31, and connected to a tenth branch point 86d on the molten salt circulation channel 86, a part of the molten salt circulation channel 86 connected from the tenth branch point 86d to the molten salt heater 40, the molten salt heater 40, and a part of the molten salt circulation channel 86 from the molten salt heater 40 to the ninth branch point 86c. That is, the eleventh circulation channel 55b passes through the ninth branch point 86c, the fifth branch channel 88b, the tenth branch point 86d, and the parts of the molten salt circulation channel 86, and meanwhile circulates the molten salt 29 between the third heat storage tank 31 and the molten salt heater 40.

On the other hand, the twelfth circulation channel 56b is constituted of the fifth branch channel 88b, a part of the molten salt circulation channel 86 connected from the ninth branch point 86c to the molten salt heat exchanger 80, the molten salt heat exchanger 80, and a part of the molten salt circulation channel 86 from the molten salt heat exchanger 80 to the tenth branch point 86d. This twelfth circulation channel 56b passes through the tenth branch point 86d, the fifth branch channel 88b, the ninth branch point 86c, and the parts of the molten salt circulation channel 86, and meanwhile circulates the molten salt 27 between the third heat storage tank 31 and the molten salt heat exchanger 80.

As illustrated in FIG. 5, a heat storage medium 54 and a heat storage medium 32 are housed in the heat storage tank 53 and the third heat storage tank 31, respectively. The heat storage tank 53 in which the heat storage medium 54 is housed stores heat received from the circulated oil 47. On the other hand, the third heat storage tank 31 in which the heat storage medium 32 is housed stores heat received from the circulated molten salt 29. The heat storage medium 54 may be either liquid or solid, may change in phase from solid to liquid, and may be the same substance as the oil 47. The heat storage medium 32 may be either liquid or solid, may change in phase from solid to liquid, and may be the same substance as the molten salt 29. When a phase change takes place, nitrogen or the like is sealed in the third heat storage tank 31 so as to prevent damage due to a volume change.

Under the plant operating condition that the solar heat can be obtained sufficiently, the open/close valves 18, 28, 30, 22, 44, 48, 51, 52 are opened, and the molten salt pump 17 and the oil pump 43 are operated. The second molten salt pump 26 and the second oil pump 45 may be either operated or not operated. The molten salt 29 flows into the third heat storage tank 31 to heat the heat storage medium 32, flows out from the third heat storage tank 31, and thereafter returns to the upstream side of the molten salt pump 17. The oil 47 flows into the heat storage tank 53 to heat the heat storage medium 54, flows out from the heat storage tank 53, and thereafter returns to the upstream side of the oil pump 43.

When the second molten salt pump 26 is operated simultaneously as the molten salt pump 17, there may be a flow such that the molten salt 29 flows back and further flows into the steam generator 1 instead of flowing into the molten salt heater 40. Thus, it is necessary to suppress the operating level of the second molten salt pump 26 so as to prevent such a flow. Similarly, when the second oil pump 45 is operated simultaneously as the oil pump 43, there may be a flow such that the oil 47 flows back and further flows into the steam generator 1 instead of flowing into the oil heater 41. Thus, it is necessary to suppress the operating level of the second oil pump 45 so as to prevent such a flow.

Further, when the second molten salt pump 26 is stopped, the flow of the molten salt 27 by the stopped second molten salt pump 26 should not be stopped. Thus, a pump structured to allow passing of the molten salt 27 even when it is stopped is used as the second molten salt pump 26, or a bypass channel which can be opened or closed selectively is provided therein. Similarly, when the second oil pump 45 is stopped, the flow of the oil 46 by the stopped second oil pump 45 should not be stopped. Thus, a pump structured to allow passing of the oil 46 even when it is stopped is used as the second oil pump 45, or a bypass channel which can be opened or closed selectively is provided therein. When the heat storage media 32, 54 reach a desired temperature, the open/close valves 28, 30, 48, 51 are closed.

Under the plant operating condition that the solar heat cannot be obtained at all or cannot be obtained sufficiently, the open/close valves 18, 22, 44, 52 are closed, the open/close valves 28, 30, 48, 51 are opened, the molten salt pump 17 and the oil pump 43 are stopped, and the second molten salt pump 26 and the second oil pump 45 are operated. Thus, the flow direction of the molten salt 29 reverses to be in the direction of dotted arrows, and the molten salt 27 flows into the steam generator 1. After decreased in temperature in the steam generator 1, the molten salt 27 is heated to a high temperature by the heat storage medium 32 when it returns to the third heat storage tank 31. Similarly, the flow direction of the oil 47 reverses to be in the direction of dotted arrows, and the oil 47 flows from the heat storage tank 53 to the steam generator 1 as the oil 46. After decreased in temperature in the steam generator 1, the oil 46 is heated to a high temperature by the heat storage medium 54 when it returns to the heat storage tank 53.

If the second molten salt pump 26 is installed on the channel from the ninth branch point 86c to the point of flowing into the steam generator 1, it can be installed so that the molten salt 29 and a molten salt 29a both do not flow back. However, this location is at a sufficiently high temperature, and thus the second molten salt pump 26 becomes one with strict specifications. Thus, it is installed at the position of FIG. 5. Further, if the second oil pump 45 is installed on the channel from the third branch point 85c to the point of flowing into the steam generator 1, it can be installed so that the oil 47 and oil 47a both do not flow back. However, this location is at a sufficiently higher temperature than the position of FIG. 5, and thus the second oil pump 45 becomes one with more strict specifications. Thus, it is installed at the position of FIG. 5.

With such a structure, under the plant operating condition that the solar heat cannot be obtained at all or cannot be obtained sufficiently, such as at night or under cloudy sky, there is an effect to keep the molten salt 29 and the oil 47 at high temperatures for a sufficiently long time.

In the steam generation system 94 of this embodiment, as compared to the first embodiment, there is an effect to keep the molten salt 29 and the oil 47 at high temperatures for a sufficiently long time under the plant operating condition that the solar heat cannot be obtained at all or cannot be obtained sufficiently, such as at night or under cloudy sky. Further, in the steam generation system 94, as compared to the case where similar technology is applied to the first prior art, in addition to all the effects of the first embodiment, while the heat storage medium 32 storing heat of the molten salt is used up to a temperature slightly less than 600°C for example, the heat storage medium 54 storing heat of the oil is used only up to a temperature of about 400°C for example, as illustrated in FIG. 5. Thus, heat retaining in the heat storage tank 53 housing the heat storage medium 54 can be performed more easily. Further, as the heat storage medium 54, it is possible to use a heat storage medium which can be used up to a temperature of about 400°C instead of a heat storage medium which can be used up to a temperature slightly less than 600°C. Thus, generally a relatively inexpensive material can be chosen as the heat storage medium 54. Note that for the circulation system of oil of the steam generation system 94, the circulation system of oil in the steam generation system 91 of the first embodiment may be applied, or the circulation system of oil in the steam generation system 92, 93 of the second or the third embodiment may be applied.

### <Fifth Embodiment>

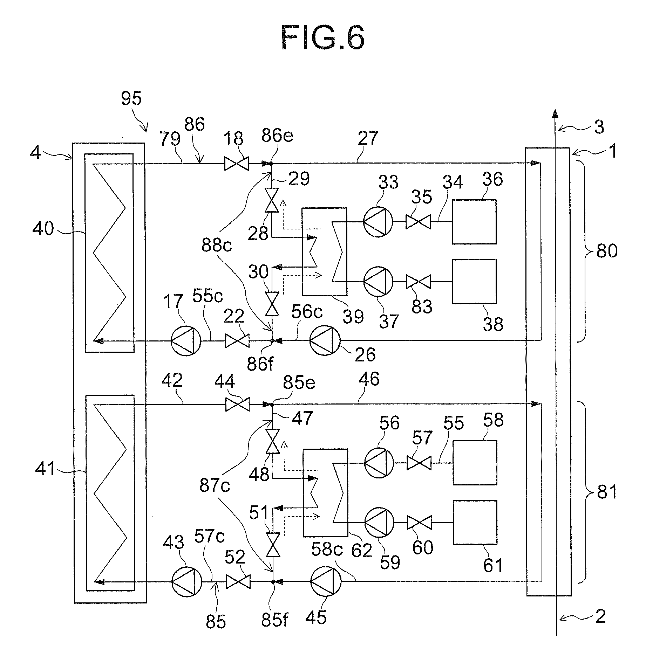

Next, a fifth embodiment will be described based on FIG. 6. Note that in FIG. 6, substantially the same components as those in the fourth embodiment illustrated in FIG. 5 are denoted by the same numerals, and duplicated descriptions are omitted.

As illustrated in FIG. 6, a steam generation system 95 of this embodiment has a second heat exchanger 39 and a first heat exchanger 62 instead of the third heat storage tank 31 and the heat storage tank 53 of the steam generation system 94 of the fourth embodiment. Further, the steam generation system 95 of this embodiment has a sixth circulation channel 57c, a seventh circulation channel 58c, a thirteenth circulation channel 55c, and a fourteenth circulation channel 56c instead of the fourth circulation channel 57b, the fifth circulation channel 58b, the eleventh circulation channel 55b, and the twelfth circulation channel 56b of the steam generation system 94 according to the fourth embodiment.

As illustrated in FIG. 6, the sixth circulation channel 57c is constituted of a third branch channel 87c branching from a fifth branch point 85e on the oil circulation channel 85, passing through the first heat exchanger 62, and connected to a sixth branch point 85f on the oil circulation channel 85, a part of the oil circulation channel 85 connected from the sixth branch point 8 5 f to the oil heater 41, the oil heater 41, and a part of the oil circulation channel 85 from the oil heater 41 to the fifth branch point 85e. That is, the sixth circulation channel 57c passes through the fifth branch point 85e, the third branch channel 87c, the sixth branch point 85f, and the parts of the oil circulation channel 85, and meanwhile circulates the oil 47 between the first heat exchanger 62 and the oil heater 41.

On the other hand, the seventh circulation channel 58c is constituted of the third branch channel 87c, a part of the oil circulation channel 85 connected from the fifth branch point 85e to the oil heat exchanger 81, the oil heat exchanger 81, and a part of the oil circulation channel 85 from the oil heat exchanger 81 to the sixth branch point 85f. This seventh circulation channel 58c passes through the sixth branch point 85f, the third branch channel 87c, the fifth branch point 85e, and the parts of the oil circulation channel 85, and meanwhile circulates the oil 46 between the first heat exchanger 62 and the oil heat exchanger 81.

Further, as illustrated in FIG. 6, the thirteenth circulation channel 55c is constituted of a sixth branch channel 88c branching from an eleventh branch point 86e on the molten salt circulation channel 86, passing through the second heat exchanger 39, and connected to a twelfth branch point 86f on the molten salt circulation channel 86, a part of the molten salt circulation channel 86 connected from the twelfth branch point 86f to the molten salt heater 40, the molten salt heater 40, and a part of the molten salt circulation channel 86 from the molten salt heater 40 to the eleventh branch point 86e. That is, the thirteenth circulation channel 55c passes through the eleventh branch point 86e, the sixth branch channel 88c, the twelfth branch point 86f, and the parts of the molten salt circulation channel 86, and meanwhile circulates the molten salt 29 between the second heat exchanger 39 and the molten salt heater 40.

On the other hand, a fourteenth circulation channel 56c is constituted of the sixth branch channel 88c, a part of the molten salt circulation channel 86 connected from the eleventh branch point 86e to the molten salt heat exchanger 80, the molten salt heat exchanger 80, and a part of the molten salt circulation channel 86 from the molten salt heat exchanger 80 to the twelfth branch point 86f. This fourteenth circulation channel 56c passes through the twelfth branch point 86f, the sixth branch channel 88c, the eleventh branch point 86e, and the parts of the molten salt circulation channel 86, and meanwhile circulates the molten salt 27 between the second heat exchanger 39 and the molten salt heat exchanger 80.

Further, the steam generation system 95 further has a third pump 33, a fourth pump 37, a fifth pump 56, a sixth pump 59, open/close valves 35, 83, 57, 60, a heat storage liquid tanks 58, 61 functioning as a first and second heat storage tanks, respectively, and a heat storage liquid tanks 36, 38 functioning as a third and fourth heat storage tanks, respectively. The heat storage liquid tanlcs 36, 38 each can store heat storage liquid 34 as a fourth heat medium. The heat storage liquid 34 may be the same substance as the molten salt 79.

The heat storage liquid 34 is transferred between the heat storage liquid tank 36 and heat storage liquid tank 38 via the second heat exchanger 39. The heat storage liquid tanks 58, 61 each can store heat storage liquid 55 as a third heat medium. The heat storage liquid 55 may be the same substance as the oil 42. The heat storage liquid 55 is transferred between the heat storage liquid tank 58 and the heat storage liquid tank 61 via the first heat exchanger 62.

More specifically, the heat storage liquid 34 is transferred through, a third transport path from the heat storage liquid tank 36 to the heat storage liquid tank 38 via the second heat exchanger 39 to exchange heat with the molten salt 29, or a fourth transport path from the heat storage liquid tank 38 to the heat storage liquid tank 36 via the second heat exchanger 39 to exchange heat with the molten salt 29.

Similarly, the heat storage liquid 55 is transferred through, a first transport path from the heat storage liquid tank 58 to the heat storage liquid tank 61 via the first heat exchanger 62 to exchange heat with the oil 47, or a second transport form the heat storage liquid tank 61 to the heat storage liquid tank 58 via the first heat exchanger 62 to exchange heat with the oil 47. The heat storage liquid 55 may be the same substance as the oil 47.

Describing more specifically, under the plant operating condition that the solar heat can be obtained sufficiently, by appropriately operating the open/close valves the molten salt 27 passes through the molten salt heat exchanger 80, and the molten salt 29 flows into the second heat exchanger 39 to heat the heat storage liquid 34, flows out from the second heat exchanger 39, and thereafter returns to the upstream side of the molten salt pump 17. The open/close valves 35, 83 are opened, the third pump 33 is operated, and the fourth pump 37 is stopped. At that time, the fourth pump 37 becomes merely a channel for the heat storage liquid 34. The heat storage liquid 34 which flowed out from the heat storage liquid tank 36 is heated in the heat exchanger 39 and flows into the heat storage liquid tank 38. When the heat storage liquid 34 stored in the heat storage liquid tank 38 reaches a desired temperature, the open/close valves 28, 30, 35, 83 are closed and the third pump 33 is stopped.

Further, by appropriately operating the open/close valves, the oil 46 passes through the oil heat exchanger 81, and the oil 47 flows into the first heat exchanger 62 to heat the heat storage liquid 55, flows out from the first heat exchanger 62, and thereafter returns to the upstream side of the oil pump 43. The open/close valves 57, 60 are opened, the fifth pump 56 is operated, and the sixth pump 59 is stopped. At that time, the sixth pump 59 becomes merely a channel of the heat storage liquid 55. The heat storage liquid 55 which flowed out from the heat storage liquid tank 58 is heated in the first heat exchanger 62 and flows into the heat storage liquid tank 61. When the heat storage liquid 55 stored in the heat storage liquid tank 61 reaches a desired temperature, the open/close valves 44, 48, 51, 52 are closed and the fifth pump 56 is stopped.

On the other hand, under the plant operating condition that the solar heat cannot be obtained at all or cannot be obtained sufficiently, the open/close valves 18, 22 are closed, the open/close valves 28, 30, 35, 83 are opened, and the fourth pump 37 is operated. At that time, the third pump 33 becomes merely a channel for the heat storage liquid 34. The heat storage liquid 34 which flowed out from the heat storage liquid tank 38 heats the molten salt 29 in the heat exchanger 39 and flows into the heat storage liquid tank 36. The heat storage liquid 34 which decreased in temperature in the heat exchanger 39 is stored in the heat storage liquid tank 36. Although it decreases in temperature in the steam generator 1, the molten salt 29 is heated by the heat storage liquid 34 and increases in temperature when it returns to the heat exchanger 39.

Further, the open/close valves 44, 52 are closed, the open/close valves 48, 51, 57, 60 are opened, and the sixth pump 59 is operated. At that time, the fifth pump 56 becomes merely a channel for the heat storage liquid 55. The heat storage liquid 55 which flowed out from the heat storage liquid tank 61 heats the oil 47 in the first heat exchanger 62 and flows into the heat storage liquid tank 58. The heat storage liquid 55 which decreased in temperature in the first heat exchanger 62 is stored in the heat storage liquid tank 58. Although it decreases in temperature in the steam generator 1, the oil 47 is heated by the heat storage liquid 55 and increases in temperature when it returns to the first heat exchanger 62. Note that if the third pump 33 is operated and the fourth pump 37 is stopped, the flow of the heat storage liquid 34 by the stopped fourth pump 37 should not be stopped. Thus, a pump structured to allow passing of the heat storage liquid 34 even when it is stopped is used as the fourth pump 37, or a bypass channel which can be opened or closed selectively is provided therein. Similarly, a pump structured to allow passing of the heat storage liquid 34 even when it is stopped is used as the third pump 33, the fifth pump 56, and the sixth pump 59, or a bypass channel which can be opened or closed selectively is provided therein.

With such a structure, it is possible to obtain an effect to keep the molten salt 29 and the oil 47 at high temperatures for a sufficiently long time under the plant operating condition that the solar heat cannot be obtained at all or cannot be obtained sufficiently, such as at night or under cloudy sky. Further, by devising the design of the second heat exchanger 39, the temperature of the molten salt 29 can be made higher than in the fourth embodiment.

In the steam generation system 95 of this embodiment, as compared to the first embodiment, it is possible to obtain an effect to keep the molten salt 29 and the oil 47 at high temperatures for a sufficiently long time under the plant operating condition that the solar heat cannot be obtained at all or cannot be obtained sufficiently, such as at night or under cloudy sky. Further, in the steam generation system 95 of this embodiment, as compared to the case where similar technology is applied to the first prior art, in addition to all the effects of the first embodiment, while the heat storage liquid 34 storing heat of the molten salt is used up to a temperature slightly less than 600°C for example, the heat storage liquid 55 storing heat of the oil is used only up to a temperature of about 400°C for example. Therefore, heat retaining in the heat storage liquid tanks 58, 61 which store the heat storage liquid 55 can be performed more easily. Further, since the heat storage liquid 55 targeted at very high temperatures such as 600°C often has a melting point equal to or higher than room temperature, a volume change leads to a risk of damage to the piping with respect to the channel of the heat storage liquid 55, but heat retaining in this channel also becomes more easy. Further, as the heat storage liquid 55, it is possible to use a heat storage medium which can be used up to a temperature of about 400°C instead of a heat storage medium which can be used up to a temperature slightly less than 600°C. Thus, generally a relatively inexpensive material can be chosen as the material of the heat storage liquid 55.

Further, in the steam generation system 95 of this embodiment, for example, when a molten salt is applied as the heat storage liquid 34 and oil is further applied as the heat storage liquid 55, the transport motive power of the fifth pump 56 and the sixth pump 59 for transporting the heat storage liquid 55 is smaller than the transport motive power of the third pump 33 and the fourth pump 37 for transporting the heat storage liquid 34. That is, the total transport motive power for transporting the heat storage liquid 34, 55 of this embodiment can be made smaller than the transport motive power in the case of applying the technology to the first prior art, and the power consumption of the entire steam generation system 95 can be reduced.

Thus, by using the steam generation system 95 of this embodiment, as illustrated in FIG. 6, it becomes possible to choose an inexpensive pump with relatively low specifications as a pump to be applied as the fifth pump 56 and the sixth pump 59. Note that for the circulation system of oil of the steam generation system 94 of this embodiment, the circulation system of oil provided in the steam generation system 91, the steam generation system 92, the steam generation system 93, or the steam generation system 94 may also be applied.

### <Sixth Embodiment>

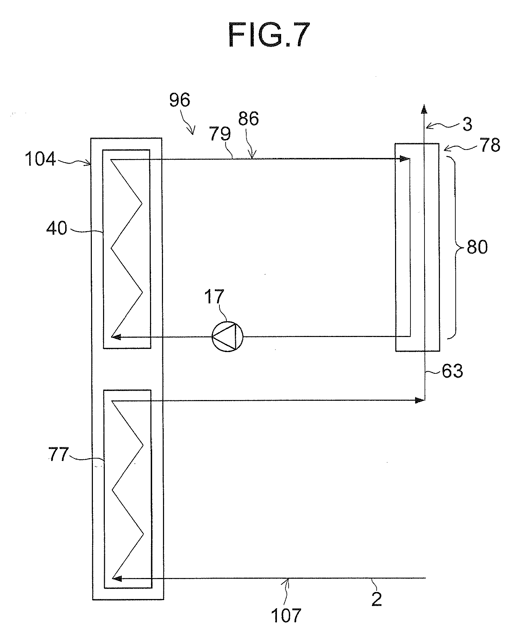

Next, a sixth embodiment will be described based on FIG. 7. Note that in FIG. 7, substantially the same components as those in the first embodiment illustrated in FIG. 2 are denoted by the same numerals, and duplicated descriptions are omitted.

As illustrated in FIG. 7, a steam generation system 96 of this embodiment has a first transfer channel 107, a heat collector 104, and a steam generator 78 instead of the oil circulation channel 85, the heat collector 4, and the steam generator 1 of the first embodiment. The heat collector 104 has a direct heater 77 functioning as a fifth heating unit instead of the oil heater 41 which the heat collector 4 has. The steam generator 78 is structured in the form deleting the oil heat exchanger 81 from the steam generator 1.

The first transfer channel 107 transfers heated (water or) steam 63 to the molten salt heat exchanger 80 of the steam generator 78 via the direct heater 77 of the heat collector 104. The first transfer channel 107 is connected in series to the steam turbine system circulation channel 84 illustrated in FIG. 1 so as to intervene in the steam turbine system circulation channel 84. Specifically, the water 2 flows out from the water supply pump 10, and the steam 3 flows into the steam turbine 7. As illustrated in FIG. 7, the molten salt heater 40 of the heat collector 104 heats the molten salt 79 by collected solar heat. The direct heater 77 of the heat collector 104 heats the water 2 by collected solar heat, and the water 2 becomes (water or) steam 63 and flows out. The steam 63 may be either water as liquid or in a state that gas and liquid are mixed, and hence is described as (water or) steam. The molten salt heat exchanger 80 of the steam generator 78 further heats the heated (water or) steam 63 by heat of the heated molten salt 79, to thereby generate the steam 3 increased in temperature. Note that it is not necessary to provide the direct heater 77 and the molten salt heater 40 in one heat collector 104. For example, there may be plural heat collectors 104, and a heat collector 104 in which the direct heater 77 is provided and a heat collector 104 in which the molten salt heater 40 is provided may be different.

In the steam generation system 96 of this embodiment, as illustrated in FIG. 7, even when the steam 63 can be heated by the direct heater 77 only up to 250°C for example, it becomes possible to heat the steam 63 up to about 565°C for example by further heating the steam 63 in the molten salt heat exchanger 80. Thus, the steam 3 can be at a high temperature as compared to the second prior art.

Further, in the steam generation system 96 of this embodiment, the molten salt 79 can be about 350°C for example at the exit of the molten salt heat exchanger 80. Thus, in the molten salt heater 40, the molten salt 79 heats up while varying from 350°C, not from 290°C for example, to slightly less than 600°C. Therefore, in the steam generation system 96 of this embodiment, as compared to the second prior art, the part using the molten salt 79 becomes small, and the total use amount or flow rate of the molten salt 79 itself can be reduced.

Further, in this embodiment, it is also possible to use oil as a heat medium instead of the molten salt 79. In this case, the molten salt heat exchanger 80 functions as a heat exchanger using oil. With this structure, the steam 3 can be heated up to about 375°C for example, and the steam 3 can be at a high temperature as compared to the second prior art.

### <Seventh Embodiment>

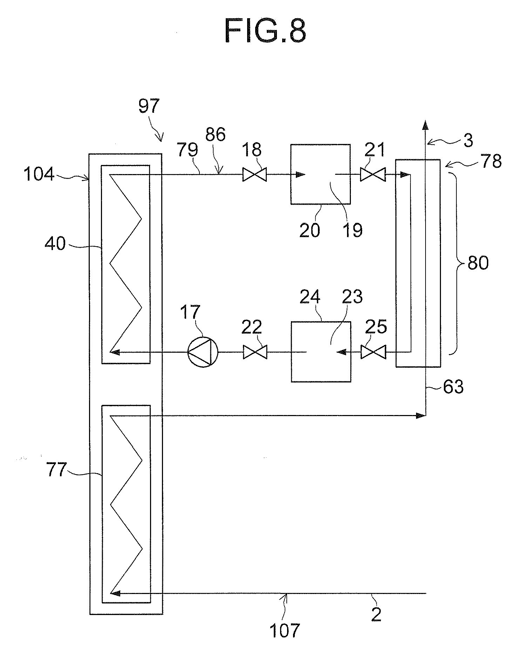

Next, a seventh embodiment will be described based on FIG. 8. Note that in FIG. 8, substantially the same components as those in the second and sixth embodiments illustrated in FIG. 3 and FIG. 7 are denoted by the same numerals, and duplicated descriptions are omitted.

As illustrated in FIG. 8, in a steam generation system 97 of this embodiment, the circulation system of molten salt of the steam generation system 92 according to the second embodiment is applied instead of the circulation system of molten salt of the steam generation system 96 according to the sixth embodiment.

In the steam generation system 97 of this embodiment, in addition to all the effects of the sixth embodiment, when it changes to the plant operating condition that the solar heat can be obtained sufficiently, as compared to the sixth embodiment, the time for the steam generator 78 to reach a state of generating the steam 3 at sufficiently high temperature can be made quite short. Further, in the steam generation system 97 of this embodiment, similarly to the sixth embodiment, it is possible to use oil as a heat medium instead of the molten salt 79. Moreover, in the steam generation system 97 of this embodiment, when oil is used as a heat medium as described above, the molten salt is not stored in the high temperature retaining tank 20 and the medium temperature retaining tank 24. Accordingly, it is not necessary to seal nitrogen in the steam generation system 97, and the atmosphere may be sealed therein.

### <Eighth Embodiment>

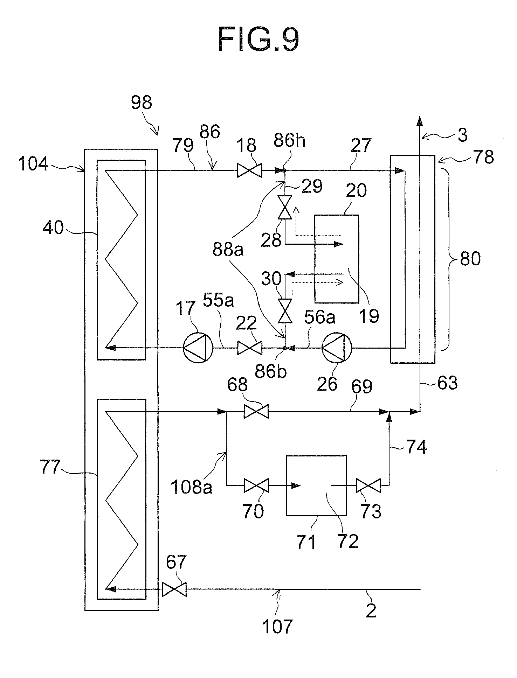

Next, an eighth embodiment will be described based on FIG. 9. Note that in FIG. 9, substantially the same components as those in the third and seventh embodiments illustrated in FIG. 4 and FIG. 8 are denoted by the same numerals, and duplicated descriptions are omitted.

As illustrated in FIG. 9, in a steam generation system 98 of this embodiment, the circulation system of molten salt of the steam generation system 93 according to the third embodiment is applied instead of the circulation system of molten salt of the steam generation system 97 according to the seventh embodiment. Further, the steam generation system 98 of this embodiment further has a second transfer channel 108a, a steam temperature retaining tank 71, and open/close valves 67, 68, 70, 73. The steam temperature retaining tank 71 functions as a second storage unit for storing water or steam to be transferred. The second transfer channel 108a branches from the first transfer channel 107, passes through the steam temperature retaining tank 71, and guides the heated (water or) steam 63 from the steam temperature retaining tank 71 to the molten salt heat exchanger 80 of the steam generator 78.

Under the plant operating condition that the solar heat can be obtained sufficiently, the open/close valves 67, 70, 73 are opened. Until reaching the steam 63, steam branches into steam 74 flowing to the steam temperature retaining tank 71 and steam 69 not flowing thereto, and then they merge. The open/close valve 68 may be either opened or closed. The steam temperature retaining tank 71 is a channel for the steam 74, and when temperature retained steam 72 in the steam temperature retaining tank 71 reaches a desired temperature, the open/close valves 70, 73 are closed and the open/close valve 68 is opened.

Under the plant operating condition that the solar heat cannot be obtained at all or cannot be obtained sufficiently, such as at night or under cloudy sky, the open/close valve 67 is closed. Regarding the steam turbine system circulation channel 84 illustrated in FIG. 1 other than the steam generation system 98, the water supply pump 10 and the cooling water pump 12 are stopped, and the steam turbine 7 is not driven, so as not to perform power generation.

When it changed to the plant operating condition that the solar heat can be obtained sufficiently, the open/close valves 67, 70, 73 are opened and the open/close valve 68 is closed. Regarding other than the steam generation system 98, the water supply pump 10 and the cooling water pump 12 are operated, and the steam turbine 7 is driven, so as to start power generation.

The water 2 heated in the direct heater 77 passes through the steam temperature retaining tank 71 and then flows into the steam generator 78. Here, a large amount of the temperature retained steam 72 is stored in a sufficiently high temperature state in the steam temperature retaining tank 71, and thus the time for the steam generator 78 to reach a state of generating the steam 3 at sufficiently high temperature can be made quite short.

In the steam generation system 98 of this embodiment, in addition to all the effects of the sixth embodiment, as described above, by the water 2 heated in the direct heater 77 passing through the steam temperature retaining tank 71 and then flowing into the steam generator 78, the large amount of the temperature retained steam 72 is stored in a sufficiently high temperature state in the steam temperature retaining tank 71. Therefore, in the steam generation system 98, as compared to the sixth embodiment, the time for the steam generator 78 to reach a state of generating the steam 3 at sufficiently high temperature can be made quite short.

Note that in the steam generation system 98 of this embodiment, the circulation system of molten salt of the steam generation system 93 according to the third embodiment is applied. Instead of this, for example, it is possible to apply the circulation system of the molten salt in the steam generation system 94 of the fourth embodiment or the circulation system of molten salt in the steam generation system 95 of the fifth embodiment.

### <Ninth Embodiment>

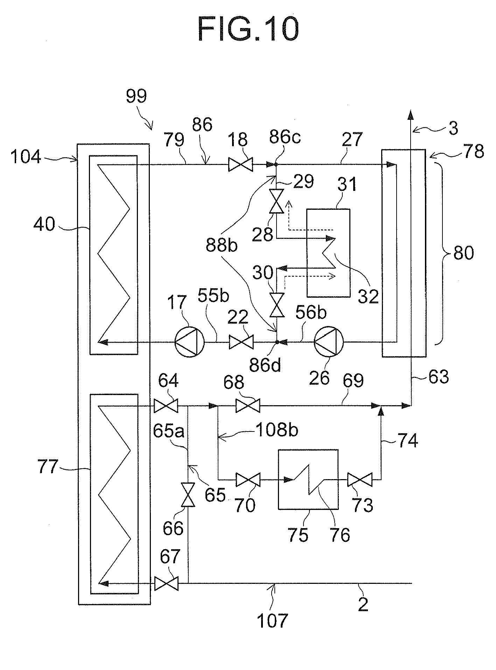

Next, a ninth embodiment will be described based on FIG. 10. Note that in FIG. 10, substantially the same components as those in the fourth and eighth embodiments illustrated in FIG. 5 and FIG. 9 are denoted by the same numerals, and duplicated descriptions are omitted.

As illustrated in FIG. 10, in a steam generation system 99 of this embodiment, the circulation system of molten salt of the steam generation system 94 according to the fourth embodiment is applied instead of the circulation system of molten salt of the steam generation system 98 according to the eighth embodiment. Moreover, the steam generation system 99 of this embodiment has a second heat storage tank 75 instead of the steam temperature retaining tank 71, and further has a bypass channel 65 through which bypass water 65a passes and open/close valves 64, 66. The second heat storage tank 75 functions as a second heat storage unit for storing heat of water or steam to be transferred. Further, the steam generation system 99 of this embodiment has a third transfer channel 108b instead of the second transfer channel 108a of the steam generation system 98. The third transfer channel 108b branches from the first transfer channel 107 and passes through the second heat storage tank 75, and guides heated water or steam from the second heat storage tank 75 to the molten salt heat exchanger 80 of the steam generator 78.

Under the plant operating condition that the solar heat can be obtained sufficiently, the open/close valves 64, 67, 70, 73 are opened and the open/close valve 66 is closed. The open/close valve 68 may be either opened or closed. A heat storage medium 76 is housed in the second heat storage tank 75. The heat storage medium 76 may be either liquid or solid, or may change in phase from solid to liquid. Under the plant operating condition that the solar heat can be obtained sufficiently, the steam 74 flows into the second heat storage tank 75 and heats the heat storage medium 76, flows out from the second heat storage tank 75, and thereafter reaches the upstream side of the steam generator 78. When the heat storage medium 76 reaches a desired temperature, the open/close valves 70, 73 are closed and the open/close valve 68 is opened.

On the other hand, under the plant operating condition that the solar heat cannot be obtained at all or cannot be obtained sufficiently, the open/close valves 64, 67, 68 are closed and the open/close valves 66, 70, 73 are opened. The water 2 bypasses the direct heater 77, flows into the second heat storage tank 75 and is heated by the heat storage medium 32, and then flows out.

Therefore, in the steam generation system 99 of this embodiment, under the plant operating condition that the solar heat cannot be obtained at all or cannot be obtained sufficiently, such as at night or under cloudy sky, it is possible to obtain an effect that the (water or) steam 63 is kept at a high temperature for a sufficiently long time, and also the steam 3 is thereby kept at a high temperature for a sufficiently long time. Note that the open/close valves 64, 66, 67 or the bypass channel 65 through which the bypass water 65a passes need not necessarily be provided. However, in the steam generation system 97 of this embodiment, the above-described open/close valves 64, 66, 67 and the bypass channel 65 are provided. Thus, the steam generation system 97 can suppress release of heat from the direct heater 77 to the atmosphere, occurrence of pressure loss, and the like under the plant operating condition that the solar heat cannot be obtained at all or cannot be obtained sufficiently.

In the steam generation system 99 of this embodiment, in addition to all the effects of the sixth embodiment, the (water or) steam 63 is kept at a high temperature for a sufficiently long time as compared to the sixth embodiment under the plant operating condition that the solar heat cannot be obtained at all or cannot be obtained sufficiently, such as at night or under cloudy sky. Thus, in the steam generation system 99, it is possible to obtain an effect that also the steam 3 is kept at a high temperature for a sufficiently long time.

Further, in the steam generation system 99 of this embodiment, the circulation system of molten salt of the steam generation system 94 according to the fourth embodiment is applied. Instead of this, however, the circulation system of the molten salt in the steam generation system 93 of the third embodiment or the circulation system of molten salt in the steam generation system 95 of the fifth embodiment may be applied.

### <Tenth Embodiment>

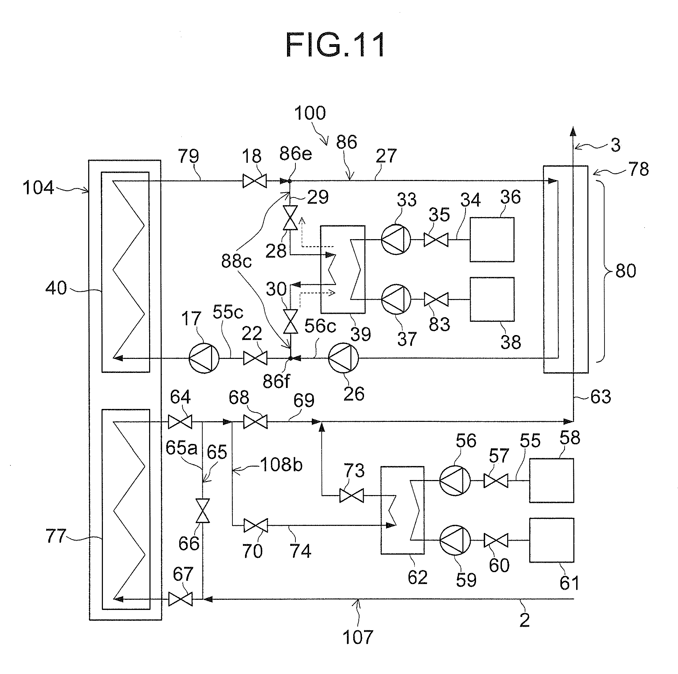

Next, a tenth embodiment will be described based on FIG. 11. Note that in FIG. 11, substantially the same components as those in the fifth and ninth embodiments illustrated in FIG. 6 and FIG. 10 are denoted by the same numerals, and duplicated descriptions are omitted.

As illustrated in FIG. 11, in a steam generation system 100 of this embodiment, the circulation system of molten salt of the steam generation system 95 according to the fifth embodiment is applied instead of the circulation system of molten salt of the steam generation system 99 according to the ninth embodiment. Further, the steam generation system 100 of this embodiment further includes a first heat exchanger 62, a fifth pump 56, a sixth pump 59, open/close valves 57, 60, and heat storage liquid tanks 58, 61 which are identical to those provided in the steam generation system 95 of the fifth embodiment.

Under the plant operating condition that the solar heat can be obtained sufficiently, by opening the open/close valves 64, 67, 70, 73 and closing the open/close valve 66, the steam 74 flows into a heat exchanger 82. The open/close valve 68 may be either opened or closed. The operation of the heat storage liquid 55 is similar to the operation described in the fourth embodiment. When the heat storage liquid 55 stored in the heat storage liquid tank 61 reaches a desired temperature, the open/close valves 70, 73, 57, 60 are closed, the open/close valve 68 is opened, and the fifth pump 56 is stopped.

On the other hand, under the plant operating condition that the solar heat cannot be obtained at all or cannot be obtained sufficiently, the open/close valves 64, 67, 68 are closed, the open/close valves 66, 70, 73, 57, 60 are opened, and the sixth pump 59 is operated. The operation of the heat storage liquid 55 is similar to the operation described in the fourth embodiment. The water 2 bypasses the direct heater 77, flows into the first heat exchanger 62 and is heated by the heat storage liquid 55, and then flows out.

Note that if the third pump 33 is operated and the fourth pump 37 is stopped, the flow of the heat storage liquid 34 by the stopped fourth pump 37 should not be stopped. Thus, a pump structured to allow passing of the heat storage liquid 34 even when it is stopped is used as the fourth pump 37, or a bypass channel which can be opened or closed selectively is provided therein. Similarly, a pump structured to allow passing of the heat storage liquid 34 even when it is stopped is used as the third pump 33, the fifth pump 56, and the sixth pump 59, or a bypass channel which can be opened or closed selectively is provided therein.

Therefore, in the steam generation system 100 of this embodiment, similarly to the ninth embodiment, under the plant operating condition that the solar heat cannot be obtained at all or cannot be obtained sufficiently, such as at night or under cloudy sky, the steam 63 is kept at a high temperature for a sufficiently long time. There is an effect that also the steam 3 is thereby kept at a high temperature for a sufficiently long time. Further, in the steam generation system 100, by devising the design of the first heat exchanger 62, the temperature of the (water or) steam 63 can be increased to a higher temperature than in the ninth embodiment. Note that the open/close valves 64, 66, 67 or the bypass channel 65 need not necessarily be provided. However, in the steam generation system 100 of this embodiment, the above-described open/close valves 64, 66, 67 and the bypass channel 65 are provided. Thus, the steam generation system 100 can suppress release of heat from the direct heater 77 to the atmosphere, occurrence of pressure loss, and the like under the plant operating condition that the solar heat cannot be obtained at all or cannot be obtained sufficiently.

In the steam generation system 100 of this embodiment, in addition to all the effects of the sixth embodiment, it is possible to obtain an effect that the steam 63 is kept at a high temperature for a sufficiently long time as compared to the sixth embodiment under the plant operating condition that the solar heat cannot be obtained at all or cannot be obtained sufficiently, such as at night or under cloudy sky, and the temperature of the steam 63 can be increased to a higher temperature. Thus, there is an effect that also the steam 3 is kept at a high temperature for a sufficiently long time.

Further, in the steam generation system 100 of this embodiment, the circulation system of molten salt of the steam generation system 95 according to the fifth embodiment is applied. Instead of this, however, it is possible to apply the circulation system of the molten salt in the steam generation system 93 of the third embodiment or the circulation system of molten salt in the steam generation system 94 of the fourth embodiment.

### <Eleventh Embodiment>

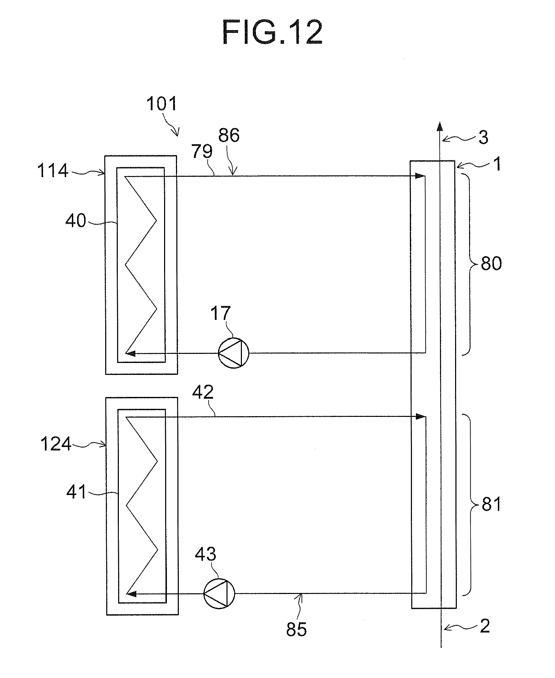

Next, an eleventh embodiment will be described based on FIG. 12. Note that in FIG. 12, substantially the same components as those in the first embodiment illustrated in FIG. 2 are denoted by the same numerals, and duplicated descriptions are omitted.

As illustrated in FIG. 12, a steam generation system 101 of this embodiment has a tower-type heat collector 114 and a trough-type heat collector 124. The tower-type heat collector 114 is provided with a molten salt heater 40. On the other hand, the trough-type heat collector 124 is provided with an oil heater 41.

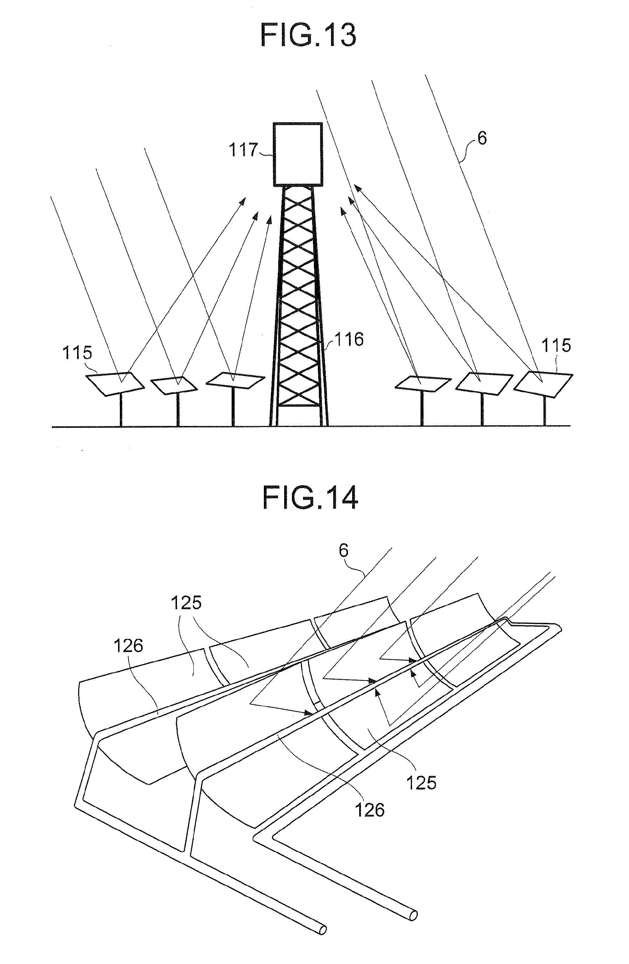

As illustrated in FIG. 13, the tower-type heat collector 114 collects solar heat (radiant heat) by gathering solar rays 6 on a heat collector main body 117 located on a tower 116 installed at a center position by using plural mirrors 115. On the other hand, as illustrated in FIG. 14, the trough-type heat collector 124 collects the solar heat by concentrating the solar rays 6 on a pipe 126 through which water or steam passes, which is installed in front of mirrors 125. The trough-type heat collector 124 has low heating temperatures as compared to the tower-type heat collector 114, but is still capable of heating up to about 400°C.

More specifically, as illustrated in FIG. 12, to heat the steam 3 to about 565°C, it is necessary to heat the molten salt 79 using the tower-type heat collector 114. However, regarding the oil 42, heating up to about 400°C is sufficient, and thus it is possible to choose the trough-type heat collector 124. Here, in the tower-type heat collector 114, it is necessary to transport the molten salt 79 having a high specific gravity to a sufficiently high position from the ground, which is different from the trough-type heat collector 124 disposed near the ground. Accordingly, it is necessary to apply a pump having high motive power for the molten salt pump 17.

On the other hand, regarding the trough-type heat collector 124 having the oil heater 41, oil having a smaller specific gravity than the molten salt 79 may be circulated near the ground. Accordingly, a pump having small motive power can be chosen as the oil pump 43. Therefore, in the steam generation system 101 of this embodiment, for example, a small pump with low specifications which consumes low power can be chosen as the oil pump 43, and thus the power consumption of the entire steam generation system 101 can be reduced.

### <Twelfth Embodiment>

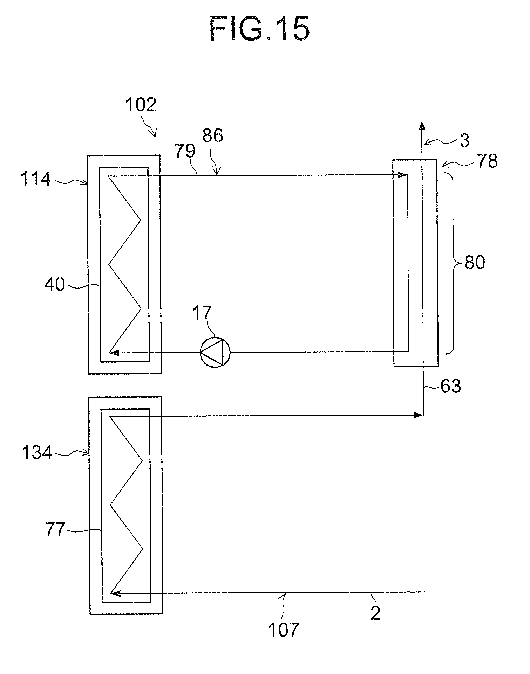

Next, a twelfth embodiment will be described based on FIG. 15. Note that in FIG. 15, substantially the same components as those in the sixth embodiment illustrated in FIG. 7 are denoted by the same numerals, and duplicated descriptions are omitted.

As illustrated in FIG. 15, a steam generation system 102 of this embodiment has a tower-type heat collector 114 and a trough-type heat collector 134. The tower-type heat collector 114 is provided with a molten salt heater 40. On the other hand, the trough-type heat collector 134 is provided with a direct heater 77.

Describing more specifically, as illustrated in FIG. 15, to heat the steam 3 to about 565°C, it is necessary to heat the molten salt 79 using the tower-type heat collector 114. However, regarding the water 2, heating up to about 250°C is sufficient, and thus it is possible to apply the trough-type heat collector 134. As described above, in the tower-type heat collector 114, it is necessary to transport the molten salt 79 having a high specific gravity to a high position, and thus it is necessary to choose a molten salt pump 17 having high motive power.

On the other hand, regarding the trough-type heat collector 134 having the direct heater 77, water or steam may be circulated near the ground, and thus motive power for water and steam can be reduced. Therefore, in the steam generation system 102 of this embodiment, for example, a small pump with low specifications which consumes low power can be chosen as the water supply pump 10 illustrated in FIG. 1, and thus the power consumption of the entire steam generation system 102 can be reduced.

Note that regarding the heat collector 4 of the steam generation systems 91 to 95 according to the first to fifth embodiments, specifications of the heat collector are not particularly mentioned. However, for example, the heat collector 4 may be structured as a tower-type heat collector having both the molten salt heater 40 and the oil heater 41. Further, for example, the heat collector 4 may be structured of a tower-type heat collector having the molten salt heater 40 and a trough-type heat collector having the oil heater 41.

Similarly, regarding the heat collector 104 of the steam generation systems 96 to 100 according to the sixth to tenth embodiments, the heat collector 104 may be structured as a tower-type heat collector having both the molten salt heater 40 and the direct heater 77. Further, instead of this, the heat collector 104 may be structured of a tower-type heat collector having the molten salt heater 40 and a trough-type heat collector having the direct heater 77.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A steam generation system, comprising:
a first heating unit heating a first heat medium by collected solar heat;
a second heating unit heating a second heat medium different from the first heat medium by collected solar heat;
a third heating unit heating water or steam by heat of the heated second heat medium; and
a fourth heating unit further heating the heated water or steam by heat of the heated first heat medium so as to generate steam which is increased in temperature.

2. A steam generation system, comprising:
a first heating unit heating a first heat medium by collected solar heat;
a fifth heating unit heating water or steam by collected solar heat; and
a fourth heating unit further heating the heated water or steam by heat of the heated first heat medium so as to generate steam which is increased in temperature.

3. The steam generation system according to claim 1, further comprising:
a first circulation channel circulating the second heat medium between the second heating unit and the third heating unit;
a first storage unit for storing the second heat medium to be circulated;
a second circulation channel constituted of a first branch channel branching from a first branch point on the first circulation channel, passing through the first storage unit without passing through the second heating unit and the third heating unit, and further connected to a second branch point on the first circulation channel, a part of the first circulation channel connected from the second branch point to the second heating unit, the second heating unit, and a part of the first circulation channel from the second heating unit to the first branch point; and
a third circulation channel constituted of the first branch channel, a part of the first circulation channel connected from the first branch point to the third heating unit, the third heating unit, and a part of the first circulation channel from the third heating unit to the second branch point.

4. The steam generation system according to claim 1, further comprising:
a first circulation channel circulating the second heat medium between the second heating unit and the third heating unit;
a first heat storage unit for storing heat of the second heat medium to be circulated;
a fourth circulation channel constituted of a second branch channel branching from a third branch point on the first circulation channel, passing through the first heat storage unit without passing through the second heating unit and the third heating unit, and further connected to a fourth branch point on the first circulation channel, a part of the first circulation channel connected from the fourth branch point to the second heating unit, the second heating unit, and a part of the first circulation channel from the second heating unit to the third branch point; and
a fifth circulation channel constituted of the second branch channel, a part of the first circulation channel connected from the third branch point to the third heating unit, the third heating unit, and a part of the first circulation channel from the third heating unit to the fourth branch point.

5. The steam generation system according to claim 1, further comprising:
a first circulation channel circulating the second heat medium between the second heating unit and the third heating unit;
a first heat exchanger through which the second heat medium to be circulated passes;
a sixth circulation channel constituted of a third branch channel branching from a fifth branch point on the first circulation channel, passing through the first heat exchanger without passing through the second heating unit and the third heating unit, and further connected to a sixth branch point on the first circulation channel, a part of the first circulation channel connected from the sixth branch point to the second heating unit, the second heating unit, and a part of the first circulation channel from the second heating unit to the fifth branch point;
a seventh circulation channel constituted of the third branch channel, a part of the first circulation channel connected from the fifth branch point to the third heating unit, the third heating unit, and a part of the first circulation channel from the third heating unit to the sixth branch point; and
a first and second heat storage tanks each capable of storing a third heat medium,
wherein the third heat medium is transferred through:
a first transport path from the first heat storage tank to the second heat storage tank via the first heat exchanger to exchange heat with the second heat medium; or
a second transport path from the second heat storage tank to the first heat storage tank via the first heat exchanger to exchange heat with the second heat medium.

6. The steam generation system according to claim 2, further comprising:
a first transfer channel passing through the fifth heating unit and transferring heated water or steam to the fourth heating unit;
a second storage unit for storing the transferred water or steam; and
a second transfer channel branching from the first transfer channel and passing through the second storage unit, and guiding water or steam from the second storage unit to the fourth heating unit.

7. The steam generation system according to claim 2, further comprising:
a first transfer channel passing through the fifth heating unit and transferring heated water or steam to the fourth heating unit;
a second heat storage unit for storing heat of the transferred water or steam; and
a third transfer channel branching from the first transfer channel and passing through the second heat storage unit, and guiding water or steam from the second heat storage unit to the fourth heating unit.

8. The steam generation system according to any one of claims 1, 3, 4, and 5,
wherein the second heat medium is oil.

9. The steam generation system according to any one of claims 1, 3, 4, 5, and 8, further comprising:
a tower-type heat collector having the first heating unit; and
a trough-type heat collector having the second heating unit.

10. The steam generation system according to any one of claims 1, 3, 4, 5, and 8, further comprising
a tower-type heat collector having the first and second heating units.

11. The steam generation system according to any one of claims 2, 6, and 7, further comprising:
a tower-type heat collector having the first heating unit; and
a trough-type heat collector having the fifth heating unit.

12. The steam generation system according to any one of claims 2, 6, and 7, further comprising
a tower-type heat collector having the first and fifth heating units.

13. The steam generation system according to any one of claims 1 to 12, further comprising:
an eighth circulation channel circulating the first heat medium between the first heating unit and the fourth heating unit;
a third storage unit for storing the first heat medium to be circulated;
a ninth circulation channel constituted of a fourth branch channel branching from a seventh branch point on the eighth circulation channel, passing through the third storage unit without passing through the first heating unit and the fourth heating unit, and further connected to an eighth branch point on the eighth circulation channel, a part of the eighth circulation channel connected from the eighth branch point to the first heating unit, the first heating unit, and a part of the eighth circulation channel from the first heating unit to the seventh branch point; and
a tenth circulation channel constituted of the fourth branch channel, a part of the eighth circulation channel connected from the seventh branch point to the fourth heating unit, the fourth heating unit, and a part of the eighth circulation channel from the fourth heating unit to the eighth branch point.

14. The steam generation system according to any one of claims 1 to 12, further comprising:
an eighth circulation channel circulating the first heat medium between the first heating unit and the fourth heating unit;
a third heat storage unit for storing heat of the first heat medium to be circulated;
an eleventh circulation channel constituted of a fifth branch channel branching from a ninth branch point on the eighth circulation channel, passing through the third heat storage unit without passing through the first heating unit and the fourth heating unit, and further connected to a tenth branch point on the eighth circulation channel, a part of the eighth circulation channel connected from the tenth branch point to the first heating unit, the first heating unit, and a part of the eighth circulation channel from the first heating unit to the ninth branch point; and
a twelfth circulation channel constituted of the fifth branch channel, a part of the eighth circulation channel connected from the ninth branch point to the fourth heating unit, the fourth heating unit, and a part of the eighth circulation channel from the fourth heating unit to the tenth branch point.

15. The steam generation system according to any one of claims 1 to 12, further comprising:
an eighth circulation channel circulating the first heat medium between the first heating unit and the fourth heating unit;
a second heat exchanger through which the first heat medium to be circulated passes;
a thirteenth circulation channel constituted of a sixth branch channel branching from an eleventh branch point on the eighth circulation channel, passing through the second heat exchanger without passing through the first heating unit and the fourth heating unit, and further connected to a twelfth branch point on the eighth circulation channel, a part of the eighth circulation channel connected from the twelfth branch point to the first heating unit, the first heating unit, and a part of the eighth circulation channel from the first heating unit to the eleventh branch point;
a fourteenth circulation channel constituted of the sixth branch channel, a part of the eighth circulation channel connected from the eleventh branch point to the fourth heating unit, the fourth heating unit, and a part of the eighth circulation channel from the fourth heating unit to the twelfth branch point; and
a third and fourth heat storage tanks each capable of storing a fourth heat medium,
wherein the fourth heat medium is transferred through:
a third transport path from the third heat storage tank to the fourth heat storage tank via the second heat exchanger to exchange heat with the **first** heat medium; or
a fourth transport path from the fourth heat storage tank to the third heat storage tank via the second heat exchanger to exchange heat with the **first** heat medium.

16. The steam generation system according to any one of claims 1 to 15,
wherein the first heat medium is a molten salt.
